# EUROPEAN PATENT APPLICATION

(11) **EP 3 110 201 A1**
(43) Date of publication of application: **28.12.2016**
(21) Application number: 15305985.2
(22) Date of filing: 25.06.2015
(51) Int. Cl.: H04W 36/00, H04W 64/00

(54) **METHOD FOR HANDLING A LOCATION DETERMINING PROCEDURE, RADIO ACCESS NODES AND RADIO ACCESS NODE GATEWAY THEREFOR**

(71) Applicant: ALCATEL LUCENT, 92100 Boulogne-Billancourt (FR)
(72) Inventor: BREND, Graham, Bath, Somerset BA1 7UE (GB); BRADLEY, Nigel, Cricklade, Wiltshire SN6 6 LT (GB)
(74) Representative: Mooij, Maarten

(57) **Abstract**

The present invention relates to a method for handling a location determining procedure with respect to a mobile user equipment (UE) in a wireless communication network. The method includes requesting establishment of a context between a first radio access node (HNB1) serving the mobile user equipment (UE) and a mobile location center (SAS) for enabling execution of a location determining procedure to determine a geographical location of the mobile user equipment (UE). Additionally, following or in parallel to the mobile user equipment (UE) being subject to a handover from the first radio access node (HNB1) operating as serving radio access node to a second radio access node (HNB2) operating as serving radio access node, information related to the location determining procedure is sent from the first radio access node (HNB1) to the second radio access node (HNB2).

## Description

### FIELD OF THE INVENTION

The present invention relates to a method for handling a location determining procedure. The present invention further relates to radio access nodes and a radio access node gateway configured to perform such a method. Finally, the present invention relates to a wireless communication network comprising such radio access nodes and radio access node gateway.

### BACKGROUND

In a cellular wireless telecommunications system, radio coverage is provided by areas known as cells. A base station is located in each cell to provide the radio coverage area. Traditional base stations provide coverage in relatively large geographical areas and these cells are often referred to as macro cells. It is possible to provide smaller-sized cells, often within a macro cell. Such smaller-sized cells are sometimes referred to as micro cells, pico cells or femto cells. Such small cells are typically established by providing a small-cell base station that provides radio coverage having a relatively limited range within the radio coverage area of a macro cell. The transmission power of the small cell base station is relatively low and, hence, each small cell provides a smaller coverage area compared to that of a macro cell and covers, for example, an office or a home. A group of such small cell base stations may together provide a wireless small-cell network.

Accurate location of mobile user equipment (UE) is important in wireless networks, for example due to the requirements of various legislative organisations as well as due to the increasing use of location information to provide value added services to mobile users.

In order to determine an accurate location for a UE a Standalone Serving Mobile Location Centre (SAS) may be used. The SAS uses measurement information to calculate an accurate location for a UE. Two commonly used techniques by the SAS to accurately locate a UE are so-called Enhanced cell-id, also referred to as cell-ID with round trip time (RTT) and Assisted Global Navigation Satellite System (A-GNSS), an example of which is Assisted Global Positioning Systems (A-GPS). Both of these techniques utilise measurement information obtained from measurements executed by the UE that is to be located.

However, it may take some time for the required measurements to be performed by the UE. Now if during such a measurement period, the UE relocates from one cell to another cell, via a so-called handover, the ability to report the relevant measurements to the SAS within a timeframe required for the location service that triggered the location request can be impacted.

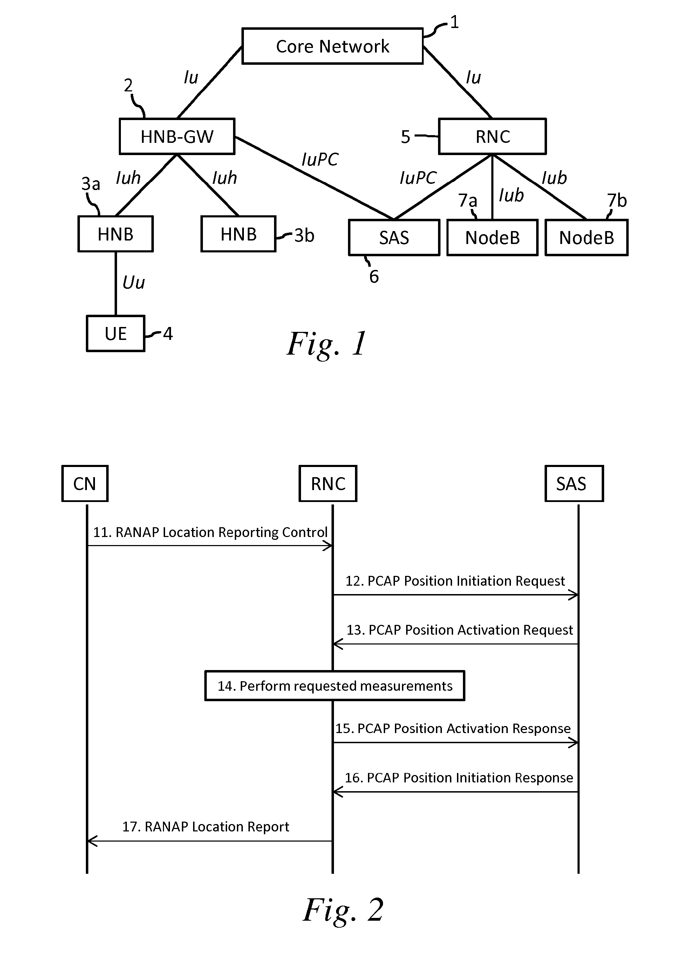

FIG. 1 schematically shows a lay-out of a heterogeneous network including cells of different size, i.e. small cells formed by base stations covering a limited area, as well as bigger cells formed by base stations covering a larger area. As an example of the base stations for forming small cells, throughout this description reference is made to home Node B base stations (HNBs) **3a, 3b.** The base stations for covering a larger area, i.e. for forming macro cells, are denoted as NodeB base stations **7a, 7b.** The HNBs **3a, 3b** are connected to an HNB gateway (HNB-GW) **2** over an luh-interface. The NodeB base stations **7a, 7b** are connected to a Radio Network Controller (RNC) **3** over an lub-interface. The HNB-GW **2** and RNC **3** are further connected to a Standalone Serving Mobile Location Centre (SAS) **6** over an IuPC-interface. The SAS **6** is configured to calculate a position of a mobile user equipment (UE) **4** as will be explained hereinafter. Both the HNB-GW **2** and the RNC **3** are further connected to a core network (CN) **1** over an lu-interface. The lu-interface may include an lu-cs-interface in case it relates to communication with a circuit-switched portion of the CN **1** and an lu-ps-interface in case it relates to communication with a packet-switched portion of the CN **1.** Finally, the UE **4** is connected to a serving base station, i.e. HNB **3a** in FIG. 1, over a Uu-interface.

In order to locate a UE within a wireless network, such as the wireless network depicted in FIG. **1****,** the typical course of action is depicted in FIG. 2 and includes the following actions:
**11** A core network CN node triggers a so-called Radio Access Network Application Part (RANAP) location reporting control procedure to the RNC over the lu-interface;
**12** The RNC initiates a corresponding Positioning Calculation Application Part (PCAP) procedure by sending a PCAP Position Initiation Request to the SAS;
**13** The SAS returns a PCAP Position Activation Request to the RNC which includes the request to arranging the performance of measurements by the UE;
**14** The RNC arranges the performance of the requested measurements, including requesting measurements from the UE;
**15** When the measurement results are obtained, the RNC sends a PCAP Position Activation Response including the measurement results to the SAS;
**16** The SAS calculates the position of the UE based on the measurement results received from the RNC and sends a PCAP Position Initiation Response to the RNC including the calculated position of the UE;
**17** The RNC forwards the calculated position of the UE in a RANAP Location Report to the initiating CN node.

Although Figure 2 shows a course of action using a macro RNC, support of an luPC interface to a SAS is also applicable to small cell deployments since accurate location information for a UE is equally important, especially if a small cell deployment includes so-called metrocells that typically have a cell radius greater than a few tens of meters and up to about 500 meters.

However, in particular the use of small cells may introduce issues with respect to determining the location of an UE accurately. Furthermore, if the small cells are deployed behind a small cell gateway, the CN nodes, as well as the SAS, may often be unaware of a UE's mobility if the UE moves between small cells supported by the small cell gateway using a handover procedure. Consequently, there are a number of occasions in which the interaction between inter small cell mobility and active PCAP sessions causes it to be difficult to determine an accurate location for a UE within a reasonable period of time. That is, a PCAP procedure and any associated measurements active on the serving small cell will be aborted when a UE hands over to another small cell before the relevant PCAP procedure has been completed. Consequently, the PCAP procedure and associated measurements will have to be restarted each time the UE relocates from one small cell to another. This leads to increased load on the SAS, since each small cell needs to initiate a new luPC connection to the SAS for the same UE. Furthermore, an overly long period of time will be required to determine the UE's location. In addition, if one small cell has initiated measurements on a UE in respect of an ongoing PCAP procedure the UE may still be measuring the required information as it relocates to another cell, but the other small cell will be unable to make use of the results of these measurements sent by the UE, since the other small cell is unaware of any PCAP procedure being in progress on the previous small cell. The other small cell will thus have to re-initiate the measurements with respect to the UE when the SAS restarts the aborted PCAP procedure after the UE has completed its handover to the other small cell.

In the worst case the size of the small cell and the speed of the UE may be such that it is impossible for the network to determine a UE's location within the time period requested by the original CN node. If there is then a deployment with a high number of cells and the UE is not in any one of them long enough for the PCAP procedure to complete, it could add a significant delay to reporting the location of the UE. This could have a severe impact on the location service.

For example, consider a deployment in an urban location which has 13 cells spaced at distances of on average 100m and a UE moving at about 48 km/h. In such a situation, the time between handovers would be about 15 seconds assuming that the UE moves diametrically across the cell and less if the UE moves through a chord of the cell. The nominal A-GPS response time as considered in the 3GPP-Standards is 20 seconds. In other words, it may nominally take 20 seconds for a UE to perform a GPS fix and report the related GPS information to a base station serving the cell within which the UE resides. Since in the aforementioned example the UE remains for about 15 seconds in each cell, which is less than the 20 seconds typically needed to obtain a GPS fix, it is possible that a PCAP procedure is not successfully completed for several minutes. This would be a significant issue, particularly if e.g. the location procedure has been triggered due to the need to locate the UE for an emergency call.

In particular when considering small cell deployments, which typically have smaller cell radiuses than macro cells, a UE may often perform a handover from one small cell to another before it has managed to perform the necessary A-GPS measurements. The following table illustrates this issue by showing the effect of UE speed (in km/h) on the time (in seconds) between handovers (HO) across small cells of various sizes if the UEs move diametrically (in meters) across a (circular) cell.

**Table 1 Influence of UE speed on handover time for different cell sizes**

| **UE speed (km/h)** | 6.4 | 25.0 | 48.0 | 80.0 | 100.0 | 112.0 |
|---|---|---|---|---|---|---|
| **Cell diameter (m)** | **HO(s)** | **HO(s)** | **HO(s)** | **HO(s)** | **HO(s)** | **HO(s)** |
| 40 | 22.5 | 5.8 | 3.0 | 1.8 | 1.4 | 1.3 |
| 200 | 112.5 | 28.8 | 15.0 | 9.0 | 7.2 | 6.4 |
| 600 | 337.5 | 86.4 | 45.0 | 27.0 | 21.6 | 19.3 |
| 1000 | 562.5 | 144.0 | 75.0 | 45.0 | 36.0 | 32.1 |
| 2000 | 1125.0 | 288.0 | 150.0 | 90.0 | 72.0 | 64.3 |
| 4000 | 2250.0 | 576.0 | 300.0 | 180.0 | 144.0 | 128.6 |

From Table 1 it can be deduced that for a cell with a diameter of 200 meters there will be insufficient time for the UE to get a nominal 20 seconds GPS fix if the UE is moving with a speed greater than about 37 km/h through that cell. Pedestrian traffic walking at about 6.4 km/h through a cell with a diameter slightly smaller than 40 meter should have enough time for the UE to get a nominal 20 seconds GPS fix. However, if the speed of the UE in such a cell increases there is a corresponding decrease in the chances of said UE being able to perform the desired GPS fit. Indeed, at 25 km/h the UE would have little chance of performing the GPS fix. Consequently, if the UE travels over a road along which a plurality of equally spaced small cells are deployed, a UE may well not be within any one cell long enough for a small cell network to determine the UE's location using a technique such as A-GPS. Furthermore, as Table 1 only considers traffic moving through the centre of the cell, the aforementioned problem becomes worse for a UE transiting across a smaller chord of the cell.

### SUMMARY

It is an object of the invention to enable the handling of a location determining procedure with improved performance in case the UE remains in a cell for a very limited period of time, so as to provide the network the best opportunity for accurately locating the UE within the time period requested by the original CN node for the requested location service. Some embodiments of the invention therefore relate to a method for handling a location determining procedure with respect to a mobile user equipment in a wireless communication network, the method comprising requesting establishment of a context between a first radio access node serving the mobile user equipment and a mobile location center for enabling execution of a location determining procedure to determine a geographical location of the mobile user equipment;
wherein, following or in parallel to the mobile user equipment being subject to a handover from the first radio access node operating as serving radio access node to a second radio access node operating as serving radio access node, the method further comprises sending information related to the location determining procedure from the first radio access node to the second radio access node. The transmittal of information related to the location determining procedure to the second radio access node allows for example an active luPC connection and associated PCAP procedure information for a UE to be maintained across an inter-base station handover. Maintaining an active PCAP session during handover reduces the impact on network entities, such as a Standalone Serving Mobile Location Centre, radio access nodes such as base stations, a user equipment or a radio access node gateway, in that none of these entities have to terminate and restart a procedure related to the location determining procedure each time the UE moves between radio access nodes.

In some embodiments, the method further comprises forwarding, by the second radio access node, at least a portion of the information related to the location determining procedure to a radio access node gateway, whereby the second radio access node requests the radio access node gateway to establish a portion of the context between the second radio access node (HNB2) and the radio access node gateway. Informing the gateway about the change provides an effective way to establish the context between the radio access node gateway and the second radio access node for position location purposes, in particular if the mobile user equipment undergoes a handover while a context for enabling execution of the location determining procedure is not yet established between the radio access node gateway and the first radio access node.

In some other embodiments, the method further comprises forwarding, by the second radio access node, at least a portion of the information related to the location determining procedure to a radio access node gateway, whereby the second radio access node requests the radio access node gateway to disconnect a portion of the context established between the first radio access node and the radio access node gateway and to reconnect the portion of the context between the second radio access node and the radio access node gateway. Informing the gateway about the change provides an effective way to disconnect the context between the radio access node gateway and the first radio access node for location determining purposes, and to reconnect the context with the second radio access node for the same purposes. These embodiments are in particular useful if the mobile user equipment undergoes a handover while a context for enabling execution of the location determining procedure was already established between the radio access node gateway and the first radio access node.

The information related to the location determining procedure may include context information related to the context between the first base station and a radio access node gateway for the location determining procedure. An example is information related to a PUA-context. Having information directly related to the context is particularly useful in embodiments in which the second radio access node forwards information related to the location determining procedure to the radio access node gateway when a context exists between the first radio access node and the radio access node gateway prior to the handover from the first radio access node to the second radio access node. The radio access node may then execute the connection and reconnection swiftly, as relevant information regarding the context is directly available.

In some embodiments, the information related to the location determining procedure is part of one or more messages between the first radio access node and the second radio access node sent to enable the handover from the first radio access node to the second radio access node. By including the information related to the location determining procedure in one or more messages used for enabling the handover from the first radio access node to the second radio access node no, or are least limited, additional messaging is needed. The information related to the location determining procedure may be spread over multiple messages between the first radio access node and the second radio access node sent to enable the handover from the first radio access node to the second radio access node. Such load sharing is an efficient way to ensure swift execution of the handover procedure, i.e. without substantive delay caused by the inclusion of the information related to the location determining procedure.

Additionally, or alternatively, the information related to the location determining procedure includes information related to a status of measurements taken on the mobile user equipment (UE) as part of the location determining procedure. Knowledge about the status of measurements associated with the location determining procedure may reduce the time needed to obtain the desired UE location information significantly. For example, based on this information, the second radio access node may know, after handover of the UE, which measurements, if any, have been configured already on the UE. Consequently, unnecessary reconfiguration of measurements may be avoided.

In some embodiments, the information related to the location determining procedure includes an identifier that identifies the context between the first radio access node and a radio access node gateway. The presence of such an identifier enables the second base station to inform the base station gateway that the context should be redirected in view of the handover in an efficient manner. The information related to the location determining procedure may further include a list of active positioning procedures for the identifier. The list provides an effective way to identify relevant positioning procedures.

Some embodiments of the invention relate to a radio access node operable to form part of a wireless communication network and configured to: operate a serving cell serving a user equipment; request establishment of a context between the radio access node and a mobile location center for enabling execution of a location determining procedure to determine a geographical location of the mobile user equipment; wherein, following or in parallel to the mobile user equipment being subject to a handover to a further radio access node operating a further cell for serving the mobile user equipment, the radio access node is further configured to send information related to the location determining procedure to the further radio access node.

Some embodiments of the invention relate to a radio access node operable to form part of a wireless communication network and, after receiving a handover request from a further radio access node operating a cell serving a user mobile equipment that a handover is to occur, configured to: enable the handover and operate a further cell serving the mobile user equipment; and receive information related to a location determining procedure from the further radio access node, the location determining procedure being executed to determine a geographical location of the mobile user equipment.

In some embodiments, the radio access node is further configured to forward at least a portion of the information related to the location determining procedure to a radio access node gateway, whereby the radio access node gateway is requested to establish a portion of the context between the radio access node and the radio access node gateway for enabling execution of the location determining procedure.

In some other embodiments, the radio access node is further configured to forward at least a portion of the information related to location determining procedure to a radio access node gateway, whereby, the radio access node gateway is requested to disconnect a context portion established between the further radio access node and the radio access node gateway and to reconnect the context portion between the radio access node and the radio access node gateway.

Some embodiments of the invention relate to a radio access node gateway operable to form part of a wireless communication network and configured to: receive a request from a first radio access node operating a cell serving a mobile user equipment to establish a context between the first radio access node and a mobile location center for enabling execution of a location determining procedure to determine a geographical location of the mobile user equipment; receiving information related to the location determining procedure from a second radio access node; and establishing a portion of the context between the second radio access node and the radio access node gateway.

In some embodiments, the radio access node gateway is further configured, prior to receiving information related to the location determining procedure, to establish the portion of the context between the first radio access node and, after receiving information related to the location determining procedure, to disconnect the context portion established between the first radio access node and the radio access node gateway and to reconnect the context portion between the second radio access node and the radio access node gateway.

Finally, some embodiments relate to a wireless communication network comprising a radio access node as defined above for operating a cell serving a user equipment prior to handover, a radio access node as defined above for operating a cell serving a user equipment after handover and a radio access node gateway as defined above.

Further particular and preferred embodiments are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying figures, in which:
FIG. 1 schematically shows a lay-out of a network that may be used in embodiments of the invention;
FIG. 2 shows a flow chart of a method for locating a UE;
FIG. 3 shows a flow chart of a method for handling a location determining procedure for locating a mobile user equipment according to an embodiment of the invention;
FIG. 4 shows a flow chart of a first example employing an embodiment of the invention; and
FIG. 5 shows a flow chart of a second example employing an embodiment of the invention.

### DESCRIPTION OF THE EMBODIMENTS

The description and figures merely illustrate the principles of the invention. It will be appreciated that those skilled in the art will be able to devise various arrangements that, although not explicitly described or shown herein, embody the principles of the invention. Furthermore, all examples recited herein are principally intended expressly to aid the reader in understanding the principles of the invention and are to be construed as being without limitation to such specifically recited examples and conditions. Moreover, all statements herein reciting principles, aspects and embodiments of the invention, as well as specific examples thereof, are intended to encompass equivalents thereof.

Throughout the description, base stations will be mentioned as examples of a radio access node. Similarly, throughout the description, a base station gateway will be mentioned as an example of a radio access node gateway.

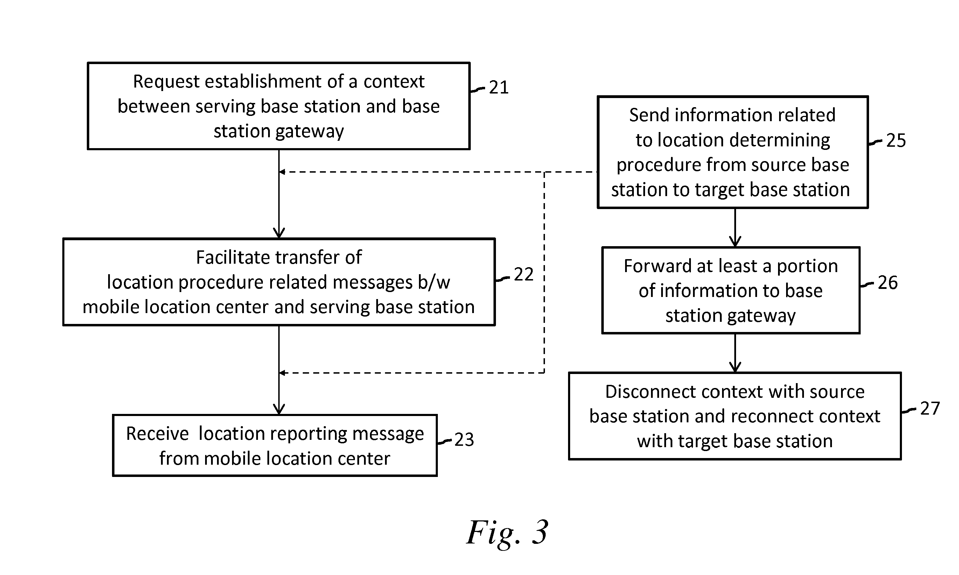

FIG. 3 shows a flow chart of a method for determining a UE location in a wireless communication network employing an embodiment of the invention. The method may be summarized as follows. Upon receiving a location reporting control message from a core network within the wireless communication network, the base station serving the UE requests the establishment of a context, e.g. a PCAP-context, between the serving base station and a mobile location center for enabling execution of a location determining procedure to determine a geographical location of the UE (action **21).** The context has a context portion (e.g. a PUA-context) between the serving base station and a base station gateway. After establishment of the context, the transfer of location procedure related messages from a mobile location center, e.g. a SAS, to the serving base station and vice versa, i.e. from the serving base station to the mobile location center is facilitated (action **22),** among others by means of the base station gateway being configured to forward such messages in an appropriate fashion. Finally, the serving base station receives a location reporting message from the mobile location center via the base station gateway, the location reporting message comprising information related to a location of the UE (action **23).**

Additionally, following or in parallel to the UE being subject to a handover from a source base station operating as serving base station to a target base station operating as serving base station (therefore dashed arrows are shown in FIG. 3), the method further includes the sending of information related to the location determining procedure from the source base station to the target base station (action **25).** The target base station may then forward at least a portion of the information related to the location determining procedure to the base station gateway (action 26). If a context was established between the source base station and the mobile location center, the base station gateway may then use the forwarded information related to the location determining procedure to disconnect the context portion between the base station gateway and the source base station and to reconnect the context portion, with the same characteristics as the disconnected one, with the target base station (action **27).** If no context was yet in place at the time the handover occurred, the base station gateway may directly establish a context portion between the base station gateway and the target base station.

This method allows a base station, i.e. source base station in FIG. 3, to provide information relating to the location determining procedure, such as context information relating to an active luPC connection for a UE to another base station, i.e. target base station in FIG. 3, when the UE handovers to the other base station.

Embodiments of the invention introduce functionality on different entities within the wireless communication network. This functionality will be briefly discussed hereafter per entity in which the base station takes the form of a home Node B (HNB) base station and the base station gateway takes the form of a home Node B gateway (HNB-GW). Additionally, with respect to the location determining procedure reference will be made to a Positioning Calculation Application Part (PCAP) Context and a PCAP User Adaptation (PUA) Context. PCAP procedures are run end-to-end over the luPC connection between the SAS and the HNB via one or more intermediate nodes e.g. an HNB-GW. A PCAP context in the HNB now identifies the relevant luPC connection and any information related to ongoing PCAP procedures. In order to communicate with the SAS (and/or any other core network node) the HNB establishes a connection towards its HNB-GW. If the end-to-end connection is an luPC connection the portion of the connection between the HNB and HNB-GW is referred to as a PUA session identified by a PUA Context. Further information regarding the relationship between HNB, HNB-GW and PCAP, PUA may be found in the 3GPP-Specifications, e.g. TS 25.467.

### Source HNB functionality

The source HNB is configured to operate a serving cell serving the user equipment. Typically in response to receiving a location reporting control message from a core network within the wireless communication network, the source HNB triggers, or requests, the establishment of a context, e.g. a PCAP context, between the source HNB and a mobile location center. The context enables execution of the location determining procedure to determine a geographical location of the UE. Following, or in parallel to the UE being subject to a handover to a target HNB, the source HNB is configured to send information related to the location determining procedure to the target HNB. Sending this information allows maintaining an active luPC connection between a UE being served by the source HNB and the mobile location center to be maintained. The information may include context information for the luPC connections and associated PCAP context(s) and PUA context(s) that are active for a UE that triggers relocation to the target HNB. Preferably, information related to the location determining procedure is spread over the relevant handover messages, e.g. by splitting, so as to provide the HNB network with the opportunity of locating the UE swiftly with minimal additional messaging and delay.

Note that it is possible for a UE to have more than one active luPC session concurrently and hence to have more than one associated PCAP & PUA context on an HNB. For example, if the circuit switched and packet switched core networks (both may be addressed as core network) each trigger a RANAP Location Reporting Control procedure for the same UE, while requesting differing location determination parameters, the serving HNB may initiate separate luPC connections to a SAS (one per core network node that initiated the RANAP Location Reporting control). As a result, the serving HNB will receive separate PCAP messages from the SAS. Hence the serving HNB will then maintain more than one PCAP & PUA context for the same UE.

It will be appreciated that if a UE has an lu connection to both the circuit switched core network and the packet switched core network domains, that it is possible for the UE to handover one of those connections from one HNB to another, without necessarily handing over the connection to the other domain at the same time.

Therefore, in case of such double connection, the serving HNB, which acts as the source HNB in a handover procedure, determines whether the UE is handing over more than one lu connection to another HNB, and if so whether the UE has associated PCAP & PUA contexts. If so, the source HNB includes the relevant PCAP & PUA context information in one or more of handover messages.

### Target HNB functionality

The target HNB operates a cell serving a UE after handover. After receiving a handover request from the source HNB the target HNB is configured to enable the handover and to serve the UE. The target HNB is further configured to receive information related to a location determining procedure from the source HNB, the location determining procedure being executed to determine a geographical location of the mobile user equipment.

The target HNB may further be configured to forward at least a portion of the information related to the location determining procedure, e.g. context information such as PUA context information, to the Home Node B gateway HNB-GW.

The target HNB thus utilises the information related to the location determining procedure, e.g. PCAP and/or PUA context information, sent to it by a source HNB when a UE is relocated to the target HNB. This allows an active luPC connection and associated PCAP procedure information for a UE to be maintained across an inter-HNB handover. Preferably, target HNB will then indicate to the HNB-GW that the UE has relocated to that HNB. Inclusion of a PUA context ID in such a message provides provision for an ongoing PUA context and associated PCAP context to be maintained.

In addition, the target HNB can utilise PCAP context information received from the source HNB to determine which positioning method(s), and hence active PCAP procedure(s), the SAS has previously requested. By including information about the type of positioning method that may be ongoing for a UE that is being handed over, the target HNB is informed of which measurements the UE may be performing, or which measurements need to be configured on the UE as part of the ongoing positioning method. Hence the target HNB is able to then act appropriately, e.g. handle measurement results when the UE reports them or configure the correct measurements on the UE when the UE has completed the handover to the target HNB. Furthermore, based on this knowledge the target HNB can determine whether it requires measurement information from the UE.

In some embodiments, the target HNB can utilise current active measurement status information provided by the source HNB for the relocated UE to manage the requested measurements on the UE to support the active PCAP procedure. For example, the target HNB may configure the requested measurements on the UE, and the UE then performs the configured measurements. The current measurement status information preferably includes the status of measurements associated with the PCAP procedure(s), which have been configured already on the UE. The measurement may be partially or completely configured. Alternatively, the measurement may be already completed.

Utilising the current active measurement status information may reduce the time needed to obtain the desired UE location information significantly. For example, so-called compressed mode, which is a mode in which the UE is entirely occupied with the execution of Enhanced Cell ID (E-CID) measurements, is not stopped for timing-maintained hard handover, i.e. a change from serving HNB forced by the UE in which the connection to the source HNB is broken before the connection to the target HNB is made. Therefore, it would be beneficial for the target HNB to know that the PCAP procedure has already been configured (or partially configured) on the UE by the source HNB to minimize any reconfiguration and/or restarting of measurements on the relocated UE. Furthermore, some positioning methods require the UE to enter compressed mode. Activation of compressed mode by itself can take approx 1-2 seconds, and the improvement to maintain those ongoing measurements for the PCAP procedure could amount to several seconds, since compressed mode and the associated measurements do not have to be reconfigured on the UE after it has handed over to the target HNB.

Similarly for A-GPS, if the target HNB has to resend a complete set of the exact same A-GPS information to the UE which has already been sent to that UE by the source HNB, the target HNB creates additional signalling load and causes delays for the RRC procedures. Furthermore, the target HNB may cause interruption and restart of an ongoing A-GPS measurement by the UE. Instead, by using the current status measurement information, the target HNB may continue with the A-GPS measurements from the point at which the measurements were interrupted on the source HNB by the handover procedure.

In some embodiments, the SAS instructs an HNB, or Radio Network Controller (RNC) to report a periodic position measurement via the PCAP Position Activation Request procedure. For example, a UE could be configured to report periodic position measurements, e.g. by using GPS, to the serving HNB which would then send the information to the SAS. Now if an active PCAP session is maintained during mobility, as described above, a configured periodic measurement can continue without impacting the SAS, HNB, HNB-GW or UE in that none of these entities have to terminate and restart (a procedure related to) the periodic measurement every time the UE moves between HNBs. Frequent stopping and restarting of periodic measurements and/or PCAP procedures at each handover is undesirable as it adds load. Furthermore, it may impact the performance of the UE. For example, if a periodic GPS measurement is used, a UE would likely determine that a GPS procedure is ongoing, and hence the UE's GPS device can keep GPS in a tracking condition. Consequently the GPS fix is reported quickly when needed, but does not consume a lot of the UE's battery when not needed. However if a GPS measurement is continually stopped and restarted, a UE would likely power down its GPS device and treat each of the GPS positioning requests independently. As a result, reporting a location fix could take longer and the power drain on the UE battery would increase.

As noted earlier while discussing the functionality of the source HNB, a UE may have more than one active luPC session concurrently and hence associated PUA & PCAP contexts on a serving HNB for the same UE. Hence the target HNB is preferably configured to manage the reception of one or more sets of PUA & PCAP context information. If more than one set of PUA & PCAP contexts is then received, the target HNB indicates this to the HNB-GW. This enables the HNB-GW to associate all the existing luPC connections for the UE to the target HNB.

### Messaging information

In order to enable the maintaining of an active PCAP session during handover between a source HNB and a target HNB as described above, the messaging information transferred between the source HNB and the target HNB and/or the messaging information transferred between the source/target HNB and the HNB-GW may include one or more of the following information:
- PUA Context ID(s): This is context information that identifies any configured positioning (luPC) connections between a HNB and HNB-GW, and hence between the HNB and SAS. The source HNB sends PUA Context ID to the target HNB to allow the target HNB to inform the HNB-GW to redirect the source HNB PUA Context ID to the target HNB;
- PCAP Context information: The source HNB sends PCAP Context information, associated with the UE that is being handed over, to the target HNB to allow the target HNB to maintain existing PCAP procedure(s) for the UE being relocated. The PCAP Context information includes a list of active PCAP procedures associated with the relevant PUA Context ID(s). It may include associated PCAP transaction ID(s). The PCAP transaction ID(s) provides an effective way to identify the relevant positioning procedure. Preferably, the PCAP Context information includes information about the status of UE measurements which are associated with each PCAP procedure. The UE measurements may be partially or completely configured and in-progress by the UE. Alternatively, the UE measurements may be completed and their result known, while awaiting results of other measurements before a PCAP response can be sent to the SAS. The measurements are configured on the UE by the HNB and, after execution of the requested measurements, the UE reports the results to the HNB. The HNB then includes the relevant information from the measurement results in the PCAP response that it sends to the SAS.

### HNB-GW functionality

Upon receiving a request from a base station serving the UE the base station gateway establishes a context, e.g. a PUA context, with the serving base station for enabling execution of a location determining procedure to determine a geographical location of a UE. Subsequently, the base station gateway facilitates transfer of location procedure related messages between a mobile location center and the serving base station. That is the base station gateway forwards location procedure related messages received from the mobile location center (SAS) towards the serving base station and vice versa. Finally, the base station gateway forwards a location reporting message to the serving base station, wherein the location reporting message comprises information related to a location of the mobile user equipment.

Following or in parallel to the aforementioned method, i.e. at some moment in time during the aforementioned procedure, the UE is subject to a handover from a source HNB operating as serving base station to a target HNB operating as serving base station. As a result of this handover, the base station gateway may receive information related to the location determining procedure from the target HNB. On the basis of this information, the base station gateway may establish a portion of the context, e.g. PUA context, between the target HNB and the base station gateway. If such context portion was already in place between the source HNB and the base station gateway, the base station gateway may be configured to disconnect the context portion between the base station gateway and the source HNB and to reconnect such context portion with the target HNB.

Alternatively, the source HNB could send information related to the location determining procedure to the base station gateway together with information that the target HNB is to take over. However, as the source HNB does not know when the UE has successfully handed over to the target HNB and thus does not know when to trigger a disconnection from the HNB-GW, such procedure runs the risk of resulting in disconnection of the PUA Context. To overcome such a risk in the foregoing scenario, the target HNB could inform the source HNB about the successful handover of the UE.

In a particular embodiment, the HNB-GW is configured to receive one or more PUA Context IDs from the target HNB, and to map the associated luPC connection(s) from the source HNB to the target HNB. The HNB-GW is then capable of coordinating the transfer of PCAP messages related to that luPC connection(s) between the SAS and the target HNB, instead of between the SAS and the source HNB. This allows the preservation of one or more luPC connections established from the HNB network (including the source HNB and the target HNB) to the SAS for a specific UE across inter-HNB UE relocations. As a result, the time needed to locate a UE which undergoes a handover may be reduced. Additionally, the load on the relevant SAS in such scenarios may be reduced.

The HNB-GW is further configured to disconnect the relocated PUA context on the source HNB at the completion of the handover.

As mentioned above, in some embodiments, the HNB-GW is configured to manage a scenario whereby a PCAP Position Initiation Request has been sent to the SAS, but a PCAP Position Activation Request has not been received before the UE relocates from the source HNB to the target HNB. In this case, the HNB-GW forwards the PCAP Position Activation Request to the target HNB after receiving it from the SAS. This scenario will be discussed in more detail in Example 2.

### EXAMPLE 1

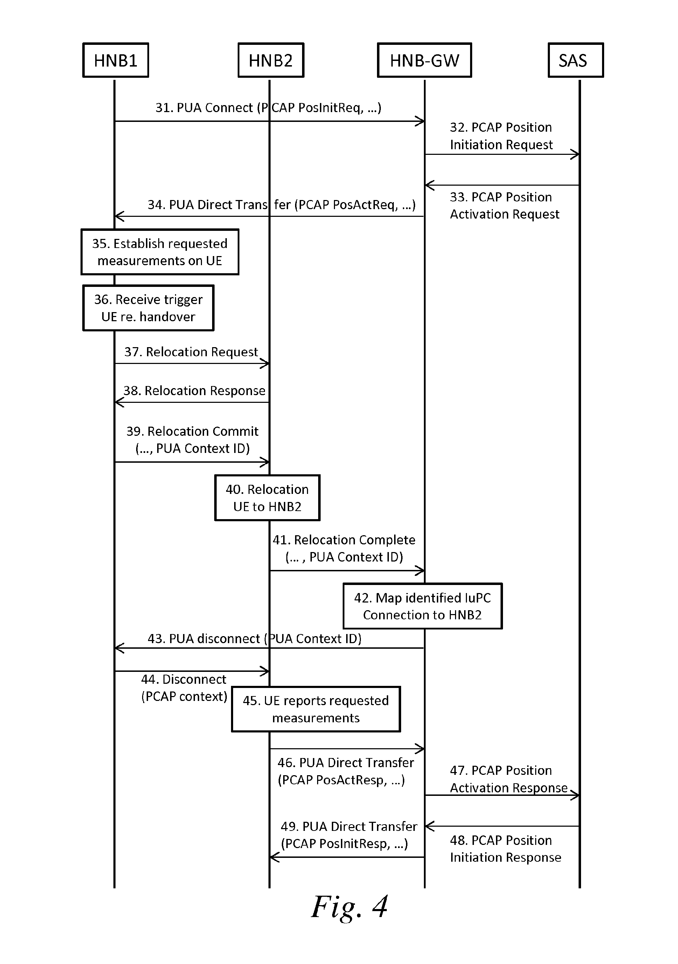

In a first example, schematically illustrated in the flow diagram of FIG. 4, a UE triggers a handover of its active lu connections from HNB1 (source HNB) to HNB2 (target HNB). In this example, HNB1 is configured to support two luPC connections to the SAS, one per active lu connection. Therefore, the PUA & PCAP context information associated with the relocated lu connections is sent from HNB1 to HNB2 so as to allow HNB2 to maintain said PUA & PCAP context. Furthermore, an existing PUA Context has previously been established on HNB1 due to the reception of a RANAP Location Reporting Control message from the CS domain. The relevant luPC connection established between the HNB, i.e. HNB1 at the start of this example, and the HNB-GW, and therefore the connection between the HNB and the SAS, has thus been identified.

The messaging sequence between the HNBs, HNB-GW and SAS in this example may be summarized as follows:
31 HNB1 receives a Radio Access Network Application Part (RANAP) Location Reporting Control message from the PS domain (not shown) and triggers the establishment of a PUA Context to the HNB-GW by sending a PCAP Position Initiation Request to the SAS;
32 The HNB-GW triggers the establishment of a Signalling Connection Control Part (SCCP) connection to the relevant SAS and forwards the PCAP Position Initiation Request to the SAS;
33 The SAS confirms the establishment of the SCCP connection and returns a PCAP Position Activation Request to the HNB-GW. At this point an luPC connection has been established between HNB1 and the SAS. The PCAP Position Activation Request from the SAS includes information elements indicating that the SAS requires the UE to perform A-GPS measurements to help the SAS to locate the UE;
**34** The HNB-GW forwards the PCAP Position Activation Request to the HNB over the previously established PUA context;
**35** The requested measurements are established on the UE;
**36** The UE sends measurements to HNB1 that triggers the handover of the UE's luPS and luCS connection to HNB2;
**37** HNB1 initiates a Relocation Request to HNB2;
**38** HNB2 responds with a Relocation Response;
**39** HNB1 reconfigures the UE using information sent from HNB2 in the Relocation Response to perform the actual handover and commits the relocation to HNB2. This relocation commit message includes the PUA Context IDs associated with the active PCAP procedures established previously due to the reception of the PCAP Position Activation Requests from the SAS;
**40** The UE relocates to HNB2;
**41** HNB2 informs the HNB-GW that a relocation has been completed and transmits the PUA Context Ids received from HNB1 to the HNB-GW;
**42** The HNB-GW re-maps the luPC connections associated with the PUA Context Ids from HNB1 to HNB2;
**43** HNB-GW indicates to HNB1 that the relocated PUA Contexts can be disconnected;
**44** HNB1 sends a disconnect message to HNB2 including the PCAP context information associated with the PUA Contexts relocated to HNB2. This includes information that the active PCAP context was triggered by the reception of a PCAP Position Activation Request including information elements indicating the need to use A-GPS measurements to locate the UE. Preferably, the information elements also indicate the status of those measurements;
**45** HNB2 receives the requested A-GPS measurements from the UE;
**46** HNB2 sends a PCAP Position Activation Response to the HNB-GW containing measurement information from the UE using the PCAP information (for example transaction identity) which was received from HNB1;
**47** HNB-GW forwards the PCAP Position Activation Response to the SAS over the relevant luPC connection which was originally established when HNB1 sent a PCAP Position Initiation Request via the HNB-GW to the SAS and over which the PCAP Position Activation Request was sent by the SAS to initiate the procedure;
**48** The SAS calculates the UE's location using the provided information and sends a PCAP Position Initiation Response containing the UE's location to the HNB-GW;
**49** Since the HNB-GW had previously been informed that the relevant PUA contexts have been relocated from HNB1 to HNB2 it forwards the PCAP Position Initiation Response to HNB2. HNB2 can then send a RANAP Location Report to the PS domain (not shown).

The example illustrates an embodiment of a method of preserving active PCAP connections and procedure(s), as well as the corresponding UE measurement configuration, across inter-HNB handover(s). The time to locate a connected UE as it moves across multiple HNB(s) may be reduced significantly.

### EXAMPLE 2

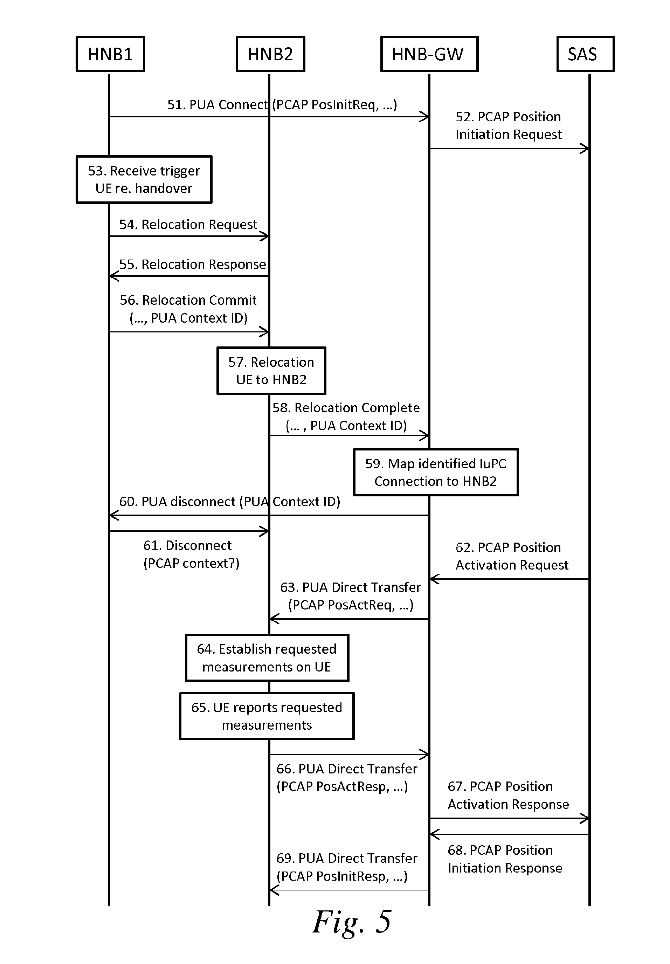

In a second example, schematically illustrated in the flow diagram of FIG. 5, a UE triggers a handover of its active lu connections from HNB1 (source HNB) to HNB2 (target HNB) after it has initiated the establishment of an luPC connection to the SAS, but before the SAS has responded. In this example the HNB-GW is able to map the relocated UE and hence the associated luPC connection(s) to HNB2. Again, an existing PUA Context has previously been established on HNB1 due to the reception of a RANAP Location Reporting Control message from the CS domain.

The messaging sequence between the HNBs, HNB-GW and SAS in this example may be summarized as follows:
**51** HNB1 receives a RANAP Location Reporting Control message from the PS domain (not shown) and triggers the establishment of a PUA Context to the HNB-GW by sending a PCAP Position Initiation Request to the SAS;
**52** The HNB-GW triggers the establishment of an SCCP connection to the relevant SAS and forwards the PCAP Position Initiation Request to the SAS;
**53** Before the SAS responds the UE sends measurements to HNB1 that triggers the handover of the UE's luPS and luCS connection to HNB2;
**54** HNB1 initiates a Relocation Request to HNB2;
**55** HNB2 responds with a Relocation Response;
**56** HNB1 reconfigures the UE using information sent from HNB2 in the Relocation Response to perform the actual handover and commits the relocation to HNB2. This message includes the PUA Context Ids associated with the UE that were established when HNB1 sent the PCAP Position Initiation Request to the SAS;
**57** The UE relocates to the HNB2
**58** HNB2 informs the HNB-GW that a relocation has been completed and includes the PUA Context Ids received from HNB1;
**59** HNB-GW re-maps the luPC connections associated with the PUA Context IDs from HNB1 to HNB2;
**60** HNB-GW indicates to HNB1 that the relocated PUA Contexts can be disconnected;
**61** HNB1 sends a disconnect message to HNB2;
**62** The SAS confirms the establishment of the SCCP connection and returns a PCAP Position Activation Request to the HNB-GW. At this point an luPC connection has been established. The PCAP Position Activation Request from the SAS includes information elements indicating that the SAS requires the UE to perform A-GPS measurements to help the SAS locate the UE;
**63** The HNB-GW forwards the PCAP Position Activation Request to HNB2;
**64** The requested measurements are established on the UE;
**65** At some point later HNB2 receives the requested A-GPS measurements from the UE;
**66** HNB2 sends a PCAP Position Activation Response to the HNB-GW containing requested measurement information from the UE;
**67** HNB-GW forwards the PCAP Position Activation Response to the SAS over the relevant luPC connection;
**68** The SAS calculates the UE's location using the provided information and sends a PCAP Position Initiation Response containing the UE's location to the HNB-GW;
**69** The HNB-GW forwards the PCAP Position Initiation Response to HNB2. HNB2 can then send a RANAP Location Report to the PS domain (not shown).

The example illustrates that active PCAP connections and procedure(s) may be maintained across inter-HNB handover(s), thus reducing the time taken to locate a UE as the connected-mode UE moves across multiple HNB(s).

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

## Claims

1. Method for handling a location determining procedure with respect to a mobile user equipment (UE) in a wireless communication network, the method comprising requesting establishment of a context between a first radio access node (HNB1) serving the mobile user equipment (UE) and a mobile location center (SAS) for enabling execution of a location determining procedure to determine a geographical location of the mobile user equipment (UE);
wherein, following or in parallel to the mobile user equipment (UE) being subject to a handover from the first radio access node (HNB1) operating as serving radio access node to a second radio access node (HNB2) operating as serving radio access node, the method further comprises sending information related to the location determining procedure from the first radio access node (HNB1) to the second radio access node (HNB2).

2. A method according to claim 1, further comprising forwarding, by the second radio access node (HNB2), at least a portion of the information related to the location determining procedure to a radio access node gateway (HNB-GW), whereby the second radio access node requests the radio access node gateway to establish a portion of the context between the second radio access node (HNB2) and the radio access node gateway (HNB-GW).

3. A method according to claim 1, further comprising forwarding, by the second radio access node (HNB2), at least a portion of the information related to the location determining procedure to a radio access node gateway (HNB-GW), whereby the second radio access node (HNB2) requests the radio access node gateway (HNB-GW) to disconnect a portion of the context established between the first radio access node (HNB1) and the radio access node gateway (HNB-GW) and to reconnect the portion of the context between the second radio access node (HNB2) and the radio access node gateway (HNB-GW).

4. A method according to any one of the preceding claims, wherein the information related to the location determining procedure is part of one or more messages between the first radio access node (HNB1) and the second radio access node (HNB2) sent to enable the handover from the first radio access node (HNB1) to the second radio access node (HNB2).

5. A method according to claim 4, wherein the information related to the location determining procedure is spread over multiple messages between the first radio access node (HNB1) and the second radio access node (HNB2) sent to enable the handover from the first radio access node (HNB1) to the second radio access node (HNB2).

6. A method according to any one of the preceding claims, wherein the information related to the location determining procedure includes information related to a status of measurements taken on the mobile user equipment (UE) as part of the location determining procedure.

7. A method according to any one of the preceding claims, wherein the information related to the location determining procedure includes an identifier that identifies the context between the first radio access node (HNB1) and a radio access node gateway (HNB-GW).

8. A method according to claim 7, wherein the information related to the location determining procedure further includes a list of active positioning procedures for the identifier.

9. Radio access node (HNB1) operable to form part of a wireless communication network and configured to:
- operate a serving cell serving a user equipment (UE);
- request establishment of a context between the radio access node (HNB1) and a mobile location center (SAS) for enabling execution of a location determining procedure to determine a geographical location of the mobile user equipment (UE);
wherein, following or in parallel to the mobile user equipment (UE) being subject to a handover to a further radio access node (HNB2) operating a further cell for serving the mobile user equipment (UE), the radio access node is further configured to send information related to the location determining procedure to the further radio access node (HNB2).

10. Radio access node (HNB2) operable to form part of a wireless communication network and, after receiving a handover request from a further radio access node (HNB1) operating a cell serving a user mobile equipment that a handover is to occur, configured to:
- enable the handover and operate a further cell serving the mobile user equipment; and
- receive information related to a location determining procedure from the further radio access node (HNB1), the location determining procedure being executed to determine a geographical location of the mobile user equipment (UE).

11. A radio access node (HNB2) according to claim 10, further configured to forward at least a portion of the information related to the location determining procedure to a radio access node gateway (HNB-GW), whereby the radio access node gateway (HNB-GW) is requested to establish a portion of the context between the radio access node (HNB2) and the radio access node gateway (HNB-GW) for enabling execution of the location determining procedure.

12. A radio access node (HNB2) according to claim 10, further configured to forward at least a portion of the information related to location determining procedure to a radio access node gateway (HNB-GW), whereby, the radio access node gateway (HNB-GW) is requested to disconnect a context portion established between the further radio access node (HNB1) and the radio access node gateway (HNB-GW) and to reconnect the context portion between the radio access node (HNB2) and the radio access node gateway (HNB-GW).

13. A radio access node gateway (HNB-GW) operable to form part of a wireless communication network and configured to:
- receive a request from a first radio access node (HNB1) operating a cell serving a mobile user equipment (UE) to establish a context between the first radio access node (HNB1) and a mobile location center (SAS) for enabling execution of a location determining procedure to determine a geographical location of the mobile user equipment (UE);
- receive information related to the location determining procedure from a second radio access node (HNB2); and
- establish a portion of the context between the second radio access node (HNB2) and the radio access node gateway (HNB-GW).

14. A radio access node gateway (HNB-GW) according to claim 13, further configured, prior to receiving information related to the location determining procedure, to establish the portion of the context between the first radio access node (HNB1) and , after receiving information related to the location determining procedure, to disconnect the context portion established between the first radio access node (HNB1) and the radio access node gateway (HNB-GW) and to reconnect the context portion between the second radio access node (HNB2) and the radio access node gateway (HNB-GW).

15. Wireless communication network comprising a radio access node according to claim 9, a radio access node according to any one of claims 10-12 and a radio access gateway according to claim 13 or 14.
